## Europäisches Patentamt
## European Patent Office
## Office européen des brevets

(19)

(11) Veröffentlichungsnummer : **0 356 419 B1**

(12) ## EUROPÄISCHE PATENTSCHRIFT

(45) Veröffentlichungstag der Patentschrift :
**16.12.92 Patentblatt 92/51**

(51) Int. Cl.$^5$ : **C08J 3/09,** B01F 1/00,
// C08L1/02

(21) Anmeldenummer : **89890209.3**

(22) Anmeldetag : **07.08.89**

(54) **Verfahren zur Herstellung von Lösungen von Cellulose.**

(30) Priorität : **16.08.88 AT 2036/88**

(43) Veröffentlichungstag der Anmeldung :
**28.02.90 Patentblatt 90/09**

(45) Bekanntmachung des Hinweises auf die
Patenterteilung :
**16.12.92 Patentblatt 92/51**

(84) Benannte Vertragsstaaten :
**AT BE CH DE ES FR GB GR IT LI LU NL SE**

(56) Entgegenhaltungen :
**FR-A- 2 450 293
DATABASE WPIL, no. 83-837666, Derwent Publicatations Ltd, London, GB
CARBOHYDRATE POLYMERS. vol. 2, no. 4,
1982, BARKING GB Seiten 229 - 231; H. CHAN-
ZY : "cellulose - amine oxide systems"
Ullmann 2 (1972) Seiten 656, 657**

(73) Patentinhaber : **Lenzing Aktiengesellschaft
A-4860 Lenzing (AT)**

(72) Erfinder : **Zikeli, Stefan, Ing.
Schacha 14
A-4844 Regau (AT)**
Erfinder : **Wolschner, Bernd, Dipl.-Ing. Dr.
Hatschekstrasse 8
A-4840 Vöcklabruck (AT)**
Erfinder : **Eichinger, Dieter, Dipl.-Ing. Dr.
Oberstadtgries 5/17
A-4840 Vöcklabruck (AT)**
Erfinder : **Jurkovic, Raimund
Hauptstrasse 27
A-4860 Lenzing (AT)**
Erfinder : **Firgo, Heinrich, Dipl.-Ing. Dr.
Oberstadtgries 7/4
A-4840 Vöcklabruck (AT)**

(74) Vertreter : **Schwarz, Albin, Dr.
Albertgasse 10/8 Postfach 224
A-1081 Wien (AT)**

EP 0 356 419 B1

## Beschreibung

Die Erfindung betrifft ein Verfahren zur Herstellung von formbaren Lösungen von Cellulose in wasserhältigen tertiären Aminoxiden aus einer Suspension von Cellulose in einer wässerigen Lösung des tertiären Aminoxides durch Wärmezufuhr unter vermindertem Druck.

Ein derartiges Verfahren ist in der PCT-Veröffentlichung WO 83/04415 beschrieben. Danach wird Cellulose in einer wässerigen Lösung eines tertiären Aminoxides, die bis zu 40 Massen% Wasser enthält, suspendiert und unter Rühren auf Temperaturen zwischen 90 und 120 °C erwärmt. Gleichzeitig wird der Druck auf 80 bis 150 mbar vermindert und so lange Wasser abgezogen, bis die Cellulose in Lösung geht. Auf diese Weise können spinnfähige Lösungen mit bis zu 15 Massen% Cellulose diskontinuierlich, d.h. chargenweise, hergestellt werden.

Durch Ausformen dieser Lösungen in Wasser werden Folien, Fäden oder Formteile auf Cellulosebasis erhalten, also Gegenstände, die heute in großem Umfang nach dem Viskoseverfahren hergestellt werden. Spinnfähige Lösungen von Cellulose in wässerigen tertiären Aminoxiden haben aber bezüglich Umweltverträglichkeit gegenüber der Viskose einen entscheidenden Vorteil: Während beim Verspinnen das tertiäre Aminoxid wiedergewonnen und wiederverwendet werden kann, entsteht beim Zersetzen der Viskose $H_2S$, COS, $CS_2$ und kolloidaler Schwefel. Diese Stoffe können nur aufwendig entsorgt werden.

Ein Verfahren der eingangs genannten Art ist auch aus der FR-A-2 450 293 bekannt. Gemäß Beispiel 1 dieser Literatur wird Cellulose mit einer wässerigen Lösung eines tertiären Aminoxides in einem Mischer vermengt und zur Abdampfung von Wasser einem Unterdruck ausgesetzt. Die erhaltene Lösung wird anschließend einer Nachbearbeitung zugeführt. Auch dieses Verfahren kann nur diskontinuierlich durchgeführt werden.

Aus der FR-A-2 450 293 ist aus Beispiel 2 weiters bekannt, Cellulose mit N-Methylmorpholin-N-oxid (NMMO), welches als Hydrat in fester Form vorliegt und 9,5 % Wasser enthält, zu vermengen und diese feste, trockene Mischung aufzuschmelzen. Dabei geht Cellulose in Lösung, da der Wassergehalt bereits ausreichend gering ist. Der Veröffentlichung "Cellulose-Amine Oxide Systems" in Carbohydrate Polymers, Vol. 2 (1982) No. 4, Seite 229, kann entnommen werden, daß zur Auflösung von Cellulose ein Wassergehalt von 17 % unterschritten werden muß. Gemäß Beispiel 2 wird die feste Mischung in einem Extruder aufgeschmolzen.

Die genannten Verfahren mit tertiären Aminoxiden als Lösungsvermittler haben sich bis heute nicht durchsetzen können, da sie noch eine Reihe von Nachteilen aufweisen.

Verfahren, welche feste Aminoxide (Hydrate) als Ausgangsstoff verwenden, können zwar in Extrudern durchgeführt werden, wobei die Auflösung der Cellulose durch einfaches Aufschmelzen des Aminoxid-Hydrates in Gang gesetzt wird. Diese Verfahren sind jedoch teuer, da sie reine Aminoxide benötigen. Werden andererseits handelsübliche, wässerige Aminoxid-Lösungen verwendet, so müssen vorher entsprechend große Mengen Wasser abgezogen werden, was in einem Extruder nicht möglich ist, da keine hohen Verdampfungsleistungen erzielt werden können. Diese Verfahren werden in Rührkesseln durchgeführt.

In einem Rührkessel kann jedoch aufgrund des ungünstigen Verhältnisses von Flüssigkeitsoberfläche zu Flüssigkeitsvolumen nur schlecht Wasser abgezogen werden, was zu langen Verweilzeiten im Bereich von 2 bis 4 Stunden im Rührkessel führt. Während dieser Zeit kommt es zu einem teilweisen Abbau der polymeren Cellulosekette, der durch die erhöhte Temperatur noch begünstigt wird. Dieser teilweise Abbau wirkt sich wiederum nachteilig auf gewisse Eigenschaften der Endprodukte nach dem Spinnprozeß aus, wie z.B. auf ihre Festigkeit, ihre Dehnung und ihre Schlingenfestigkeit. Weiters ist bekannt, daß es insbesondere beim Erhitzen über 130°C zu einer starken Verfärbung infolge Zersetzung des verwendeten Aminoxides kommen kann. Diese Zersetzung kann bei einigen Verbindungen, wie z.B. N-Methylmorpholin-N-oxid, sogar explosionsartig unter heftiger Gasentwicklung verlaufen, so daß die im Rührkessel vorhandenen Lösungen aufgrund ihrer Menge ein Sicherheitsrisiko darstellen.

Bei einer großtechnischen Durchführung des Verfahrens müßte daher bei Verwendung von Rührkesseln entsprechend abgesichert mit Hochdruckautoklaven gearbeitet werden, welche aus wirtschaftlichen Gründen für einen kontinuierlichen Betrieb nicht in Frage kommen. Andererseits ist im Rührkessel und ohne Sicherheitseinrichtung nur eine diskontinuierliche Arbeitsweise möglich, wodurch die Flexibilität des Verfahrens sehr gering ist, da Parameter, wie z.B. Temperatur und Abdampfrate, nur schwer verändert werden können. Dazu kommt noch, daß infolge der hohen Viskosität der Celluloselösungen viel Spinnmasse vom Rührkessel zurückgehalten wird, was sowohl die Reinigung des Kessels erschwert als auch die Wirtschaftlichkeit weiter verschlechtert.

Die Erfindung setzt sich zum Ziel, diese Nachteile zu beseitigen und ein Verfahren zur Herstellung von Celluloselösungen in wasserhältigen tertiären Aminoxiden zur Verfügung zu stellen, das kontinuierlich durchgeführt werden kann. Das bereitzustellende Verfahren soll also nicht feste Aminoxide als Ausgangsstoff verwenden, sondern eine wässerige Aminoxid-Lösung. Die Wärmebehandlung der Suspension soll darüberhinaus wesentlich kürzer erfolgen, um die thermische Belastung der Cellulose und des tertiären Aminoxides zu minimieren. Außerdem soll das dem Stand der Technik inhärente Sicherheitsrisiko vermieden werden.

Diese Aufgabe wird erfindungsgemäß dadurch gelöst, daß bei einem Verfahren der eingangs erwähnten Art

- die Suspension kontinuierlich durch einen Einlaß in ein evakuierbares, beheizbares Gefäß eingebracht wird,
- die eingebrachte Suspension zur Bildung von zwei Oberflächen schicht- bzw. filmartig mechanisch ausgebreitet wird,
- die ausgebreitete Suspension zur Wärmezufuhr über eine Oberfläche mit einer beheizten Innenwand des Gefäßes, die als Heizfläche dient, in Kontakt gebracht wird,
- die ausgebreitete Suspension unter intensivem Mischen über die beheizte Innenwand transportiert wird,
- während des Transportes über die Heizfläche die der Innenwand abgewandte, zweite Oberfläche der ausgebreiteten Suspension dem verminderten Druck ausgesetzt wird, um Wasser zu verdampfen, bis die suspendierte Cellulose in Lösung geht, wobei der Wasserdampf gegen die Transportrichtung der Suspension abgeführt wird und
- die formbare Celluloselösung über einen Auslaß aus dem Gefäß kontinuierlich abgezogen wird.

Die schicht- bzw. filmartige Ausbreitung der Cellulosesuspension über die Heizfläche führt zu einer großen Flüssigkeitsoberfläche, die den Wasserabzug erleichtert. Gleichzeitig ermöglicht sie eine rasche Erwärmung der Suspension auf die zur Lösungsherstellung notwendige Temperatur. Durch den Transport über die Heizfläche wird eine ständige Durchmischung der Suspension erzielt, die den Wärme- und Stoffaustausch weiter beschleunigt.

Die Viskosität der erfindungsgemäß hergestellten Cellulose-Lösung beträgt zwischen 50 und 15.000 Pa.s. Zur Einstellung der Viskosität der Lösung, die im Relativsystem gemessen wird,, und zur Beeinflussung des Quellverhaltens der Cellulose in der Suspension kann ein Verdünnungsmittel, wie z.B. Äthanol, der Suspension zugegeben werden.

Eine besonders gute Durchmischung wird erzielt, wenn die über die Heizfläche ausgebreitete Schicht eine Dicke von maximal 20 mm, vorzugsweise 1,5 bis 5 mm, aufweist.

Vorteilhaft wird als tertiäres Amionoxid N-Methylmorpholin-N-oxid, vorzugsweise in einer wässerigen Lösung mit 40 Massen% Wasser, verwendet.

Eine bevorzugte Ausführungsform des erfindungsgemäßen Verfahrens ist dadurch gekennzeichnet, daß die Suspension auf eine Temperatur zwischen 50 und 150°C, vorzugsweise zwischen 60 und 100°C, gebracht und einem Druck von 0,5 mbar bis 1000 mbar, vorzugsweise 50 mbar bis 150 mbar, ausgesetzt wird.

Als besonders günstig hat es sich erwiesen, wenn die Suspension während einer Dauer von 1 min bis zu 60 min mit der Heizfläche in Kontakt gehalten wird. Diese Zeitspanne ist einerseits ausreichend, um eine homogene Lösung herzustellen, und andererseits so kurz, daß eine Zersetzung des tertiären Aminoxides und ein Abbau der Cellulose weitgehend verhindert werden kann.

Es hat sich als zweckmäßig erwiesen, das erfindungsgemäße Verfahren, in einem indirekt beheizten, mit einer Rühreinrichtung versehenen und evakuierbaren Gefäß durchzuführen, welches Gefäß als zylindrischer Behälter mit einer zentrisch gelagerten Rührwelle und daran angesetzten Rührschaufeln ausgebildet ist, wobei der radiale Abstand der Rührschaufeln zur Innenwand des Behälters maximal 20 mm beträgt und im oberen Teil des Behälters ein Einlaß für die Cellulosesuspension und im unteren Ende ein Auslaß für die formbare Celluloselösung vorgesehen ist.

Eine vorteilhafte Ausführungsform der erfindungsgemäß verwendeten Einrichtung weist an der Rührwelle einen Verteilring zur schicht- bzw. filmartigen Ausbreitung der Cellulosesuspension an der Innenwand des Behälters auf.

Zur Steuerung des Transportes der Cellulosesuspension entlang der Innenwand des Behälters hat es sich als vorteilhaft erwiesen, wenn die Rührschaufeln zur Achse der Rührwelle einen Neigungswinkel aufweisen, der in seiner Größe verstellbar ist.

Das mit der erfindungsgemäß verwendeten Einrichtung durchführbare erfindungsgemäße Verfahren ist äußerst flexibel in bezug auf eine Änderung der Betriebsparameter und weist ein gegenüber dem Stand der Technik wesentlich geringeres Sicherheitsrisiko auf, da nicht eine große Lösungsmittelmenge auf einmal erhitzt wird, sondern durch die schichtartige Ausbreitung über die Heizfläche immer nur eine vergleichsweise geringe Menge.

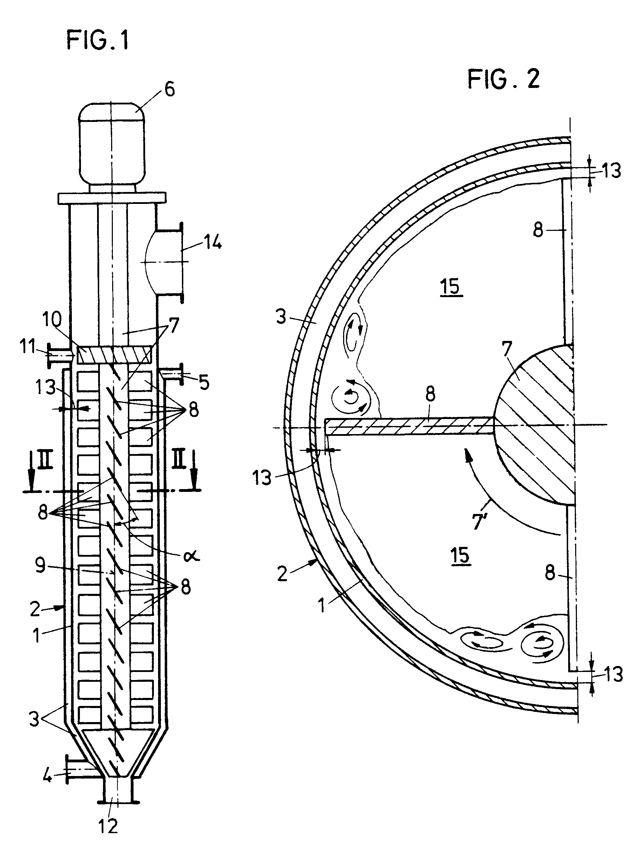

Die genannte erfindungsgemäß verwendete Einrichtung ist anhand der Fig. 1 und 2 näher veranschaulicht, wobei Fig. 1 einen teilweisen Längsschnitt der Einrichtung und Fig. 2 einen Schnitt entlang der Linie II-II der Fig. 1 in vergrößertem Maßstab zeigen.

Mit 1 ist die Innenwand eines vorzugsweise aufrecht stehenden Rotationskörpers bezeichnet, der beim dargestellten Ausführungsbeispiel nahezu über die gesamte Länge als zylindrischer Behälter 2 ausgebildet ist. Die Innenwand 1 ist größtenteils von einem Heizmantel 3 umgeben mit Anschlüssen 4 und 5 für das Heizmedium, wobei der Anschluß 4 der Zuführung des Heizmediums und der Anschluß 5 seiner Abführung dient.

Im Behälter 2 ist zentrisch eine vom Motor 6 angetriebene Rührwelle 7 mit daran angesetzten Rührschaufeln 8 gelagert. Die Rührschaufeln 8, die beim dargestellten Ausführungsbeispiel eben ausgebildet sind, erstrecken sich radial zur Achse, wobei ihre Ebene einen Neigungswinkel alpha zur Achse 9 der Rührwelle 7 aufweist, dessen Größe vorzugsweise verstellbar ist. Über den Rührschaufeln 8 ist an der Rührwelle 7 ein Verteilring 10 angebracht, der die durch den Einlaß 11 eingebrachte Cellulosesuspension an der Innenwand 1 schichtartig ausbreitet. Der Verteilring 10 befindet sich somit in Höhe des Einlaßes 11.

Am unteren Ende ist der Behälter 2 kegelstumpfförmig verjüngt mit einem Auslaß 12 für die homogene Celluloselösung. Die Rührschaufeln 8 weisen im gesamten Bereich des Behälters 2 einen konstanten radialen Abstand 13 zur Innenwand 1 des Behälters 2 auf, der maximal 20 mm beträgt.

Am oberen Teil des Behälters 2, u.zw. oberhalb der Ebene des Verteilringes 10, ist eine Öffnung 14 zur Evakuierung des Behälters 2 und zum Abziehen von Wasserdampf vorgesehen.

Die Funktion der Einrichtung ist folgende:

Die Cellulosesuspension wird - gegebenenfalls in vortemperiertem Zustand - kontinuierlich durch den Einlaß 11 in den Behälter 2 eingebracht, der unter vermindertem Druck steht, dort vom Verteilring 10 erfaßt, an der Innenwand 1 ausgebreitet und von den Rührschaufeln 8 entlang der indirekt beheizten Innenwand 1, die als Heizfläche dient, zum Auslaß 12 am unteren Ende des Behälters 2 transportiert. Für die indirekte Beheizung eignen sich Wärmeträgermedien, wie Wasser, Öl oder Dampf.

Während des Transportes der Cellulosesuspension entlang der indirekt beheizten Innenwand 1 wird die Suspension erwärmt, wobei gleichzeitig infolge des verminderten Druckes Wasser verdampft, so daß das tertiäre Aminoxid aufkonzentriert wird, bis die Cellulose in Lösung geht.

In Fig. 2 ist im Detail ersichtlich, wie die Cellulosesuspension im Behälter 2 verarbeitet wird. Dargestellt ist die Rührwelle 7 samt Rührschaufeln 8, Innenwand 1 und Heizmantel 3, wobei eine Drehrichtung der Rührwelle 7 im Uhrzeigersinn angenommen wurde und durch den Pfeil 7' angezeigt wird. Die schichtartige Ausbreitung bzw. die Dicke der Schicht der Cellulosesuspension ist durch den radialen Abstand 13 der Rührschaufeln 8 von der beheizten Innenwand 1 gewährleistet. An den Rührschaufeln bilden sich aufgrund der Drehbewegung Bugwellen aus Cellulosesuspension, die in Fig. 2 schematisch dargestellt sind. In diesen Bugwellen werden - wie in Fig. 2 angedeutet - die Celluloseteilchen umgewälzt, wobei sich diese Bewegung auch auf die an der Innenwand 1 ausgebreitete Suspensionsschicht überträgt. Dadurch ist ein stetiges Umschichten sowie ein intensives Durchmischen der Suspension gewährleistet, das den Wärme- und Stoffaustausch wesentlich begünstigt.

Es ist für die kontinuierliche Führung des erfindungsgemäßen Verfahrens von entscheidender Bedeutung, daß der abgeschiedene Wasserdampf im Gegenstrom zum Transport der Suspension abgezogen wird. Außerdem ist es wichtig, für einen raschen Abzug des Wasserdampfes einen genügend großen Brüdenraum 15 vorzusehen, der dann gegeben ist, wenn das Verhältnis der Länge zum Durchmesser des zylindrischen Teiles des Behälters 2 einen Wert zwischen 4 und 8 aufweist.

Die Erfindung gestattet das Herstellen von Celluloselösungen mit bis zu 30 Massen% Cellulose.

Die Erfindung wird in den nachfolgenden Beispielen noch näher erläutert.

Beispiel 1:

Eine Suspension von Vorhydrolysesulfatzellstoff (Polymerisationsgrad ca. 1400) in einer wässerigen Lösung von N-Methyl-morpholin-N-oxid mit einem Wassergehalt von 40 Massen% wurde auf 70°C temperiert und kontinuierlich in einer Menge von 90 kg/h durch den Einlaß 11 in die erfindungsgemäße Einrichtung eingebracht. Der Gehalt an Vorhydrolysesulfatzellstoff in der Suspension wurde so gewählt, daß nach Abdampfen des überschüssigen Wassers eine Celluloseendkonzentration von 10 Massen% erhalten wurde.

Die Rührwelle 7 wurde mit einer Drehzahl von 450 $min^{-1}$ betrieben, wobei die Dicke der über der Innenwand 1 ausgebreiteten Schicht 15 mm aufwies. Die indirekt beheizte Innenwand 1 wies eine Fläche von 0,5 $m^2$ auf und wurde mit Wärmeträgeröl so beaufschlagt, daß sich entsprechend der Erwärmung der Suspension (im Gegenstrom zum Wärmeträgeröl) eine mittlere Temperaturdifferenz von 83°C ergab. Im Brüdenraum 15 wurde ein Druck von 100 mbar eingestellt.

Am Auslaß 12 konnten pro Stunde 72 kg homogene Celluloselösung erhalten werden, was einer Verweilzeit der Suspension in der erfindungsgemäßen Einrichtung von 3 min entspricht. Die Lösung konnte in entgaster Form ausgetragen werden. Ihre Viskosität betrug 1500 Pa.s (gemessen im Relativsystem). Durch mikroskopische Untersuchung der Lösung wurde festgestellt, daß keine ungelösten Cellulosepartikel in der Lösung vorhanden waren.

Die anfallenden Brüden wurden im Gegenstrom mit einer Temperatur von 70°C abgezogen und anschließend kondensiert, wobei der Destillatstrom pro Stunde 29 kg betrug.

Beispiel 2:

Eine Suspension von gemahlenem Vorhydrolysesulfatzellstoff (Polymerisationgrad ca. 1400) in einer wässerigen Lösung von N-Methyl-morpholin-N-oxid mit einem Wassergehalt von 40 Massen% wurde auf 80°C temperiert und kontinuierlich in einer Menge von 90 kg/h durch den Einlaß 11 in die erfindungsgemäße Einrichtung eingebracht. Der Gehalt an Vorhydrolysesulfatzellstoff wurde so gewählt, daß nach Abdampfen des überschüssigen Wassers eine Celluloseendkonzentration von 15 Massen% erhalten wurde.

Die Rührwelle 7 wurde mit einer Drehzahl von 450 min$^{-1}$ betrieben, wobei die Dicke der über der Innenwand 1 ausgebreiteten Schicht 1,5 mm aufwies. Die indirekt beheizte Innewand 1 wies eine Fläche von 0,5 m$^2$ auf und wurde mit Wärmeträgeröl so beaufschlagt, daß sich entsprechend der Erwärmung der Suspension (im Gegenstrom zum Wärmeträgeröl) eine mittlere Temperaturdifferenz von 112°C ergab. Im Brüdenraum 15 wurde ein Druck von 150 mbar eingestellt.

Am Auslaß 12 konnten pro Stunde 64 kg homogene Lösung erhalten werden, die in entgaster Form anfiel. Dieser Massestrom entsprach einer Verweilzeit von 4 min.

Die Lösung wurde als hochviskose Masse (11.000 Pa.s, gemessen im Relativsystem) erhalten, wobei unter dem Mikroskop keine ungelösten Celluloseteilchen festgestellt werden konnten. Die Lösung wurde direkt einer Spinnmaschine zugeführt und zu cellulosischen Fasern versponnen.

Die anfallenden Brüden wurden im Gegenstrom mit einer Temperatur von 80°C abgezogen und anschließend kondensiert, wobei der Destillatstrom pro Stunde 26 kg betrug.

**Patentansprüche**

1. Verfahren zur Herstellung von formbaren Lösungen von Cellulose in wasserhältigen tertiären Aminoxiden aus einer Suspension von Cellulose in einer wässerigen Lösung des tertiären Aminoxides durch Wärmezufuhr unter vermindertem Druck, dadurch gekennzeichnet, daß

　　- die Suspension kontinuierlich durch einen Einlaß (11) in ein evakuierbares, beheizbares Gefäß (2) eingebracht wird,

　　- die eingebrachte Suspension zur Bildung von zwei Oberflächen schicht- bzw. filmartig mechanisch ausgebreitet wird,

　　- die ausgebreitete Suspension zur Wärmezufuhr über eine Oberfläche mit einer beheizten Innenwand (1) des Gefäßes (2), die als Heizfläche dient, in Kontakt gebracht wird,

　　- die ausgebreitete Suspension unter intensivem Mischen über die beheizte Innenwand (1) transportiert wird,

　　- während des Transportes über die Heizfläche die der Innenwand (1) abgewandte, zweite Oberfläche der ausgebreiteten Suspension dem verminderten Druck ausgesetzt wird, um Wasser zu verdampfen, bis die suspendierte Cellulose in Lösung geht, wobei der Wasserdampf gegen die Transportrichtung der Suspension abgeführt wird und

　　- die formbare Celluloselösung über einen Auslaß (12) aus dem Gefäß (2) kontinuierlich abgezogen wird.

2. Verfahren nach Anspruch 1, dadurch gekennzeichnet, daß die über die Heizfläche ausgebreitete Schicht eine Dicke. von maximal 20 mm aufweist.

3. Verfahren nach Anspruch 2, dadurch gekennzeichnet, daß die ausgebreitete Schicht eine Dicke zwischen 1,5 bis 5 mm aufweist.

4. Verfahren nach einem oder mehreren der Ansprüche 1 bis 3, dadurch gekennzeichnet, daß als tertiäres Amin N-Methyl-morpholin-N-oxid verwendet wird.

5. Verfahren nach Anspruch 4, dadurch gekennzeichnet, daß N-Methyl-morpholin-N-oxid in einer wässerigen Lösung mit 40 Massen% Wasser verwendet wird.

6. Verfahren nach einem oder mehreren der Ansprüche 1 bis 5, dadurch gekennzeichnet, daß die Suspension auf eine Temperatur zwischen 50 und 150°C gebracht und einem Druck von 0,5 mbar bis 1000 mbar ausgesetzt wird.

7. Verfahren nach Anspruch 6, dadurch gekennzeichnet, daß die Suspension auf eine Temperatur zwischen 60 und 100°C gebracht und einem Druck von 50 mbar bis 150 mbar ausgesetzt wird.

8. Verfahren nach einem oder mehreren der Ansprüche 1 bis 7, dadurch gekennzeichnet, daß die Transportdauer, während der die Suspension mit der Heizfläche in Kontakt ist, 1 min bis 60 min beträgt.

9. Verwendung einer Vorrichtung zur Durchführung des Verfahrens nach einem der Ansprüche 1 bis 8, mit einem indirekt beheizten, mit einer Rühreinrichtung versehenen und evakuierbaren Gefäß (2), welches als zylindrischer Behälter mit einer zentrisch gelagerten Rührwelle (7) und daran angesetzten Rührschaufeln (8) ausgebildet ist, wobei der radiale Abstand (13) der Rührschaufeln (8) zur Innenwand (1) des Behälters (2) maximal 20 mm beträgt und im oberen Teil des Behälters ein Einlaß (11) für die Cellulosesuspension und im unteren Ende ein Auslaß (12) für die formbare Celluloselösung vorgesehen ist.

10. Verwendung nach Anspruch 9, dadurch gekennzeichnet, daß die Rührwelle (7) einen Verteilring (10) zur schicht- bzw. filmartigen Ausbreitung der Cellulosesuspension an der Innenwand (1) des Behälters (2) aufweist.

11. Verwendung nach Anspruch 9 oder 10, dadurch gekennzeichnet, daß die Rührschaufeln (8) zur Achse (9) der Rührwelle (7) einen Neigungswinkel (alpha) aufweisen, der in seiner Größe verstellbar ist.

## Claims

1. A process for the preparation of shapeable solutions of cellulose in aqueous tertiary amine oxides from a suspension of cellulose in an aqueous solution of the tertiary amine oxide by the supply of heat at a reduced pressure, characterized in that
   - the suspension is fed continuously through an inlet (11) into an evacuable, heatable vessel (2),
   - the fed suspension is mechanically spread in the form of a layer or film to form two surfaces,
   - the spread suspension is contacted with one surface to a heated inside wall (1) of the vessel (2), which is used as heating surface in order to supply heat,
   - the spread suspension is transported along the heated inside wall (1) while intensively mixing the suspension,
   - the second surface of the spread suspension opposed to the inside wall (1) while transporting along the heating surface is subjected to reduced pressure to evaporate water until the suspended cellulose dissolves, steam being removed towards the transporting direction of the suspension and
   - shapeable solution of cellulose is removed continuously from the outlet (12) of the vessel (2).

2. A process according to claim 1, characterized in that the layer spread over the heating surface has a thickness of 20 mm at the most.

3. A process according to claim 2, characterized in that the spread layer has a thickness between 1.5 to 5 mm.

4. A process according to claims 1 to 3, characterized in that the tertiary amine used is N-methyl-morpholine-N-oxide.

5. A process according to claim 4, characterized in that N-methyl-morpholine-N-oxide is used in an aqueous solution with 40 % by weight water.

6. A process according to one or more of claims 1 to 5, characterized in that the suspension is heated to a temperature between 50° and 150°C, and subjected to a pressure of 0.5 mbar to 1000 mbar.

7. A process according to claim 6, characterized in that the suspension is heated to a temperature between 60° and 100°C, and subjected to a pressure of 50 mbar to 150 mbar.

8. A process according to one or more of claims 1 to 7, characterized in that the duration of transport during which the suspension is in contact with the heating surface is 1 minute to 60 minutes.

9. Use of an apparatus for the performance of the process according to one of claims 1 to 8, having an indirectly heated, evacuable vessel (2) having an agitating device, the vessel taking the form of a cylindrical tank having a centrally mounted agitator shaft (7) and agitator vanes (8) attached thereto, the radial distance (13) between the agitator vanes (8) and the inside wall (1) of the tank (2) being 20 mm at the most, and the upper portion of the tank comprises an inlet (11) for the cellulose suspension and the lower end comprises an outlet (12) for the shapeable cellulose solution.

10. Use of an apparatus according to claim 9, characterized in that the agitator shaft (7) has a distributing ring (10) for spreading the cellulose suspension in a layer or film over the inside wall (1) of the tank (2).

11. Use of an apparatus according to claims 9 or 10, characterized in that the agitator vanes (8) have in relation to the axis (9) of the agitator shaft (7) an angle of inclination (alpha) whose size is adjustable.

## Revendications

1. Procédé de préparation de solutions postformables de cellulose dans des oxydes d'amines tertiaires contenant de l'eau à partir d'une suspension de cellulose dans une solution aqueuse d'oxyde d'amine tertiaire, par apport de chaleur sous pression réduite, caractérisé en ce que
   - la suspension est introduite en continu par un orifice d'entrée (11) dans un récipient (2) chauffable, susceptible d'être mis sous vide,
   - la suspension introduite est étalée mécaniquement sous forme de couche ou de film pour la formation de deux surfaces,
   - la suspension étalée est mise en contact par une surface avec une paroi interne chauffée (1) du récipient (2), qui sert de surface chauffante, pour l'apport de chaleur,
   - la suspension étalée est transportée avec mélange intensif sur la paroi interne chauffée (1),

- au cours du transport sur la surface chauffante, la deuxième surface, opposée à la paroi interne (1), de la suspension étalée est exposée à la pression réduite pour évaporer l'eau jusqu'à ce que la cellulose en suspension passe en solution, la vapeur d'eau étant évacuée en sens inverse du sens de transport de la suspension, et

- la solution postformable de cellulose est évacuée en continu du récipient (2) par un orifice de sortie (12).

2. Procédé selon la revendication 1, caractérisé en ce que la couche étalée sur la surface chauffante présente une épaisseur de 20 mm au maximum.

3. Procédé selon la revendication 2, caractérisé en ce que la couche étalée présente une épaisseur comprise entre 1,5 et 5 mm.

4. Procédé selon une ou plusieurs des revendications 1 à 3, caractérisé en ce que l'on utilise comme amine tertiaire le N-oxyde de N-méthylmorpholine.

5. Procédé selon la revendication 4, caractérisé en ce que l'on utilise le N-oxyde de N-méthylmorpholine dans une solution aqueuse contenant 40 % en poids d'eau.

6. Procédé selon une ou plusieurs des revendications 1 à 5, caractérisé en ce que la suspension est portée à une température comprise entre 50 et 150°C et est exposée à une pression de 0,5 mbar à 1 000 mbar.

7. Procédé selon la revendication 6, caractérisé en ce que la suspension est portée à une température comprise entre 60 et 100°C et est exposée à une pression de 50 mbar à 150 mbar.

8. Procédé selon une ou plusieurs des revendications 1 à 7, caractérisé en ce que la durée du transport pendant laquelle la suspension est en contact avec la surface chauffante est de 1 min à 60 min.

9. Utilisation d'un dispositif pour la mise en oeuvre du procédé selon l'une des revendications 1 à 8, comportant un récipient (2) à chauffage indirect, muni d'un dispositif d'agitation et susceptible d'être mis sous vide, qui est sous forme d'un récipient cylindrique muni d'un arbre d'agitation (7) monté de manière centrée et muni de pales d'agitation (8), dans lequel la distance radiale (13) entre les pales d'agitation (8) et la paroi interne (1) du récipient (2) est de 20 mm au maximum et il est prévu à la partie supérieure du récipient un orifice d'entrée (11) pour la suspension de cellulose et à l'extrémité inférieure un orifice de sortie (12) pour la solution postformable de cellulose.

10. Utilisation selon la revendication 9, caractérisée en ce que l'arbre d'agitation (7) présente un anneau distributeur (10) pour l'étalement en forme de couche ou de film de la suspension de cellulose sur la paroi interne (1) du récipient (2).

11. Utilisation selon la revendication 9 ou 10, caractérisée en ce que les pales d'agitation (8) forment avec l'axe (9) de l'arbre d'agitation (7) un angle d'inclinaison ($\alpha$) dont la valeur est réglable.

FIG.1

FIG. 2